# EUROPEAN PATENT APPLICATION

(11) **EP 3 064 449 A1**
(43) Date of publication of application: **07.09.2016**
(21) Application number: 14859166.2
(22) Date of filing: 15.10.2014
(51) Int. Cl.: B65D 85/48, B65D 85/00

(54) **GLASS PLATE HOLDER AND GLASS PLATE TRANSPORT DEVICE**

(30) Priority: 30.10.2013 JP 2013226075; 29.11.2013 JP 2013247985
(71) Applicant: Nippon Sheet Glass Company, Limited, Tokyo 108-6321 (JP)
(72) Inventor: MAEDA, Kenji, Tokyo 108-6321 (JP)
(74) Representative: Webster, Jeremy Mark
(86) International application number: PCT/JP2014/077461
(87) International publication number: WO 2015/064364

(57) **Abstract**

This glass plate holder is a glass plate holder for holding a flat glass plate in a vertical position, and includes: a clip configured to grip both surfaces of the glass plate; a supporting body that supports the clip and that has a guide portion that allows the clip to move in a vertical direction; and an elastic member that biases the clip upward.

## Description

### Technical Field

The present invention relates to a glass plate holder and a glass plate transport device.

### Background Art

Various methods for transporting a glass plate having a plate-like shape have conventionally been proposed, and, for example, a device such as the device described in Patent Literature 1 is disclosed. Specifically, the device includes: a holder member that is folded in half so as to grip an end portion of a glass plate; and a fixing member that detachably supports the holder member gripping the glass plate. A fitting recessed portion is formed in the upper surface of the fixing member, and the holder member gripping the glass plate is inserted into this fitting recessed portion. It is thus possible to hold the glass plate in the upright position.

### Citation List

### Patent Literature

Patent Literature 1: International Publication WO 2007/123070

### Summary of Invention

### Technical Problem

However, in order to hold a glass plate with the above-described device, it is necessary to carry out two processes, namely the process of gripping the glass plate with the holder member and the process of inserting the holder member into the fixing member. Also, it is necessary to support the holder member such that the holder member does not become separated from the glass plate, and there is thus the problem that the task of holding the glass plate on the device is laborious. Furthermore, since the glass plate can be heavy in weight in some cases, there is also the risk of the glass plate being damaged by a shock when it is inserted into the fixing member. The present invention is made in view of the problems above, and aims to provide a glass plate holder that is capable of holding a glass plate with a simple operation and is also capable of reducing a shock when the glass plate is mounted.

### Solution to Problem

### First Aspect of Invention

One aspect of the present invention is a glass plate holder for holding a flat glass plate in a vertical position, and includes: a clip configured to grip both surfaces of the glass plate; a supporting body that supports the clip and that has a guide portion that allows the clip to move in a vertical direction; and an elastic member that biases the clip upward.

With this configuration, it is possible to grip a glass plate by merely positioning the glass plate so as to be gripped by the clip. Also, since the clip is supported by the supporting body, the glass plate is held in the vertical position by the supporting body upon the glass plate being attached to the clip. Therefore, unlike with conventional examples, it is possible to hold the glass plate with a simple operation. Also, since the supporting body has a guide portion that allows the clip to move in the vertical direction, the clip is able to move in the vertical direction. Also, since the clip is biased upward by the elastic member, a shock can be moderated by the elastic member when the glass plate is positioned to the clip. Therefore, it is possible to prevent the glass plate from being damaged by a shock when mounting the glass plate. Note that the "vertical position" according to the present invention does not necessarily indicate the perfectly vertical position, and a certain degree of inclination is allowed.

In each glass plate holder above, the clip may be supported by the supporting body so as to be able to move in the thickness direction of the glass plate. This configuration allows the glass plate held by the glass plate holder to move in the thickness direction of the glass plate when force in the thickness direction is applied to the glass plate. Therefore, this configuration moderates a shock caused by the force thus applied. Consequently, it is possible to prevent the glass plate from being damaged.

In each glass plate holder above, the clip may be configured to include: a first gripping member that has a first contact portion configured to be in contact with one surface of the glass plate; a second gripping member that has a second contact portion configured to be in contact with the other surface of the glass plate; and a pivot portion that supports the first gripping member and the second gripping member such that the first gripping member and the second gripping member are rotatable relative to each other, and the supporting body may be configured to include a pressing portion that presses at least one of the gripping members so as to narrow a gap between the first contact portion and the second contact portion as the clip moves downward.

With this configuration, upon the glass plate being positioned between the first gripping member and the second gripping member of the clip, the clip moves downward due to the weight of the glass plate, and accordingly the pressing portion of the supporting body applies pressure so as to narrow the gap between the first contact portion and the second contact portion of the clip. Consequently, it is possible to reliably hold the glass plate in the holder with a very simple operation.

In each glass plate holder above, a configuration may be adopted in which the second gripping member: has a center of gravity on a side of a surface that is farther from the first gripping member; and rotates so as to move away from the first gripping member due to an effect of the center of gravity upon the clip moving upward. With this configuration, while the clip is moving upward, the second gripping member rotates so as to move away from the first gripping member due to the effect of the center of gravity because the gripping members are not pressed by the pressing portion. Consequently, it is possible to release the pressure and widen the gap between the gripping members of the clip by simply pulling the glass plate upward. Therefore, it is easy to detach the glass plate from the holder. Also, when the clip has moved upward, the gap between the gripping members is always wide, and it becomes easy to insert the glass plate between the gripping members. Therefore, it becomes easy to attach the glass plate to the holder.

In each glass plate holder above, a configuration may be adopted in which the clip is provided with an engaging member, the guide portion includes a guide groove with which the engaging member engages such that the engaging member is able to move in a vertical direction, and an upward movement of the engaging member is restricted by an upper end portion of the guide groove. With this configuration, it is possible to prevent the clip from detaching from the supporting body even when the clip is biased upward by the elastic member.

In each glass plate holder above, the engaging member may be provided on a lower end portion of the clip, and a horizontal groove that extends in the thickness direction of the glass plate may be formed to communicate with a lower end portion of the guide groove. This configuration allows the engaging member of the clip to move along the horizontal groove in the situation where the clip has moved downward, and thus allows the glass plate held by the clip to move in the thickness direction of the glass plate when force in the thickness direction is applied to the glass plate, for example. Therefore, this configuration moderates a shock caused by the force thus applied. Consequently, it is possible to prevent the glass plate from being damaged.

In each glass plate holder above, the glass plate may be a glass plate for a car. Since it is easy to hold the glass plate, especially a large-sized windshield glass or the like can be loaded on, without being damaged. Also, since it is easy to detach the glass plate from the holder, the glass plate in the state of being held by the holder can be carried to an automated car manufacturing line.

In each glass plate holder above, a configuration may be adopted in which a molding is attached to at least part of a peripheral portion of the glass plate, the clip has a supporting portion that supports the glass plate, and the supporting portion supports an edge portion of the glass plate to which the molding is attached. With this configuration, the glass edge portion of the glass plate is supported by the supporting surface of the clip. In other words, the weight of the glass plate per se acts on the glass edge portion, and does not act on the molding attached to the glass peripheral portion. Therefore, it is possible to prevent the molding from being damaged or deformed by external force applied to it.

A glass plate transport device according to one aspect of the present invention includes at least one glass plate holder among the glass plate holders above.

### Second Aspect of Invention

Various methods for transporting a glass plate having a plate-like shape have conventionally been proposed, and, for example, there is a stopper such as the stopper described in Utility Model Application Publication NO. H1-96861. This stopper is formed to have a standing plate-like shape. One surface has a supporting portion that supports a lower end portion of a glass plate, and the other surface has a contact portion that presses another glass plate. Therefore, in order to hold a glass plate with this stopper, at least two stoppers are used, and the glass plate is positioned between these stoppers. Specifically, the lower end portion of the glass plate is positioned on the supporting portion of one stopper, and the glass plate is pressed with the contact portion of another stopper. The number of stoppers increases as the number of glass plates increases.

However, when using the stopper above, it is necessary to prepare at least two stoppers in order to hold one glass plate, and it is necessary to position these stoppers together with the glass plate. Therefore, there is the problem that the task of holding the glass plate is laborious. The present invention is made in view of the problems above, and aims to provide a glass plate holder that is capable of holding a glass plate with a simple operation.

One aspect of the present invention is a glass plate holder for holding a flat glass plate in a vertical position, and includes:
a gripping body that is able to grip both surfaces of the glass plate; and
a supporting body that supports the gripping body,
wherein the gripping body has:
a first gripping member that is to be in contact with one surface of the glass plate;
a second gripping member that is to be in contact with the other surface of the glass plate; and
a mounting portion that is provided in the first gripping member and that supports an edge of the glass plate, and
the first gripping member is rotatably supported, and the mounting portion is positioned between a rotation center of the first gripping member and the second gripping member.

With this configuration, upon a glass plate being mounted on the mounting portion of the first gripping member, the first gripping member is pressed due to the weight of the glass plate per se, and rotates toward the second gripping member. This is because the mounting portion is positioned between the rotation center of the first gripping member and the second gripping member. As a result of the first gripping member rotating toward the second gripping member, the gripping members are able to grip the glass plate. Therefore, it is possible to hold the glass plate by performing a simple operation to mount the glass plate on the mounting portion. Note that the "vertical position" according to the present invention does not necessarily indicate the perfectly vertical position, and a certain degree of inclination is allowed.

In the glass plate holder above, the pressing portion that is able to press the glass plate can be formed in the first gripping member at a position higher than the mounting portion. Consequently, the first gripping member rotates toward the second gripping member and the pressing portion is able to press the glass plate, and therefore the glass plate can be stably gripped between the gripping members.

In each glass plate holder above, a configuration may be adopted in which the rotation center is positioned closer to the second gripping member than the center of gravity of the first gripping member is, and the first gripping member in the initial state rotates so as to move in the direction away from the second gripping member due to the effect of the center of gravity. With this configuration, in the initial state in which the glass plate is not mounted, the first gripping member rotates so as to move in the direction away from the second gripping member due to the effect of the center of gravity. Therefore, the gap between the gripping members is widened, and it becomes easy to insert the glass plate between the gripping members. Therefore, it becomes easy to attach the glass plate to the holder.

Each glass plate holder above may further include a base platform that supports the supporting body such that the supporting body is able to rotate about a shaft center that is parallel with the rotation center. With this configuration, the glass plate held by the glass plate holder swings together with the supporting body when force in the thickness direction is applied to the glass plate. Therefore, this configuration moderates a shock caused by the force thus applied. Consequently, it is possible to prevent the glass plate from being damaged.

In each glass plate holder above, the glass plate may be a glass plate for a car. Since it is possible to hold the glass plate with a simple operation, especially a large-sized front glass or the like can be loaded on, without being damaged. Also, since it is easy to detach the glass plate from the holder, the glass plate in the state of being held by the holder can be carried to an automated car manufacturing line.

A glass plate transport device according to one aspect of the present invention includes at least one glass plate holder among the glass plate holders above.

With the glass plate holder and the glass plate transport device according to aspects of the present invention, it is possible to hold a glass plate with a simple operation, and furthermore, it is possible to reduce a shock when the glass plate is mounted.

### Brief Description of Drawings

FIG. 1 is a cross-sectional view of a glass plate.
FIG. 2 is a front view of a glass plate holder according to a first embodiment.
FIG. 3 is a side view pertaining to FIG. 2.
FIG. 4 is a front view of a clip.
FIG. 5 is a front view illustrating how to use the glass plate holder.
FIG. 6 is a front view illustrating how to use the glass plate holder.
FIG. 7 is a front view illustrating how to use the glass plate holder.
FIGS. 8A and 8B are front views illustrating how to use the glass plate holder.
FIG. 9 is a front view showing another example of the glass plate holder.
FIG. 10 is a front view of a glass plate transport device.
FIG. 11 is a plan view pertaining to FIG. 10.
FIG. 12 is a cross-sectional view of a glass plate.
FIG. 13 is a front view of a glass plate holder according to a second embodiment.
FIG. 14 is a side view pertaining to FIG. 13.
FIG. 15 is a front view illustrating how to use the glass plate holder shown in FIG. 13.
FIG. 16 is a front view illustrating how to use the glass plate holder shown in FIG. 13.
FIG. 17 is a front view showing another example of the glass plate holder.

### Description of Embodiments

### A. First Embodiment (First Aspect of Invention)

The following describes a first embodiment of a glass plate holder according to the present invention with reference to the drawings.

### 1. Glass Plate with Molding

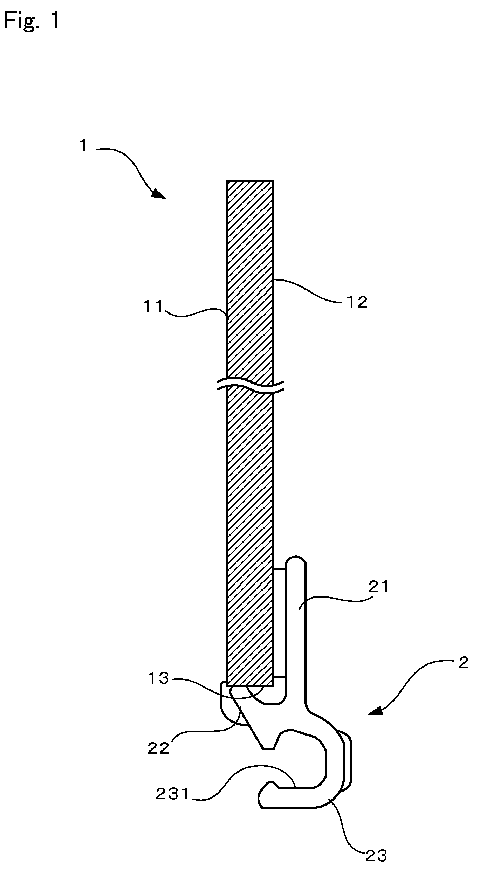

First, a description is given of a glass plate to be handled with the glass plate holder according to the present embodiment with reference to FIG. 1. FIG. 1 is a cross-sectional view of a glass plate. As shown in FIG. 1, this glass plate 1 is formed to have a plate-like shape with a first surface 11 and a second surface 12, and is used in a car. A molding 2 that extends so as to have an elongated shape is attached to one peripheral portion of the glass plate 1. The molding 2 is used for attaching the glass plate 1 to a car, and includes: a plate-like bonding portion 21 that is to be bonded to the second surface 12 of the glass plate 1; and a base portion 22 that extends from an end portion of the bonding portion 21 so as to cover an edge portion 13 of the glass plate 1. An attaching portion 23 that is formed to have a U-like cross section and that is elastically deformable is coupled to the end portion of the base portion 22 on the bonding portion 21 side, i.e., the end portion of the glass plate 1 on the second surface 12 side. An opening 231 in the U-like attaching portion 23 faces in the direction of the first surface 11 of the glass plate 1, and is configured to engage with an attachment-target member of a car to which the attaching portion 23 is to be

### attached.

### 2. Glass Plate Holder

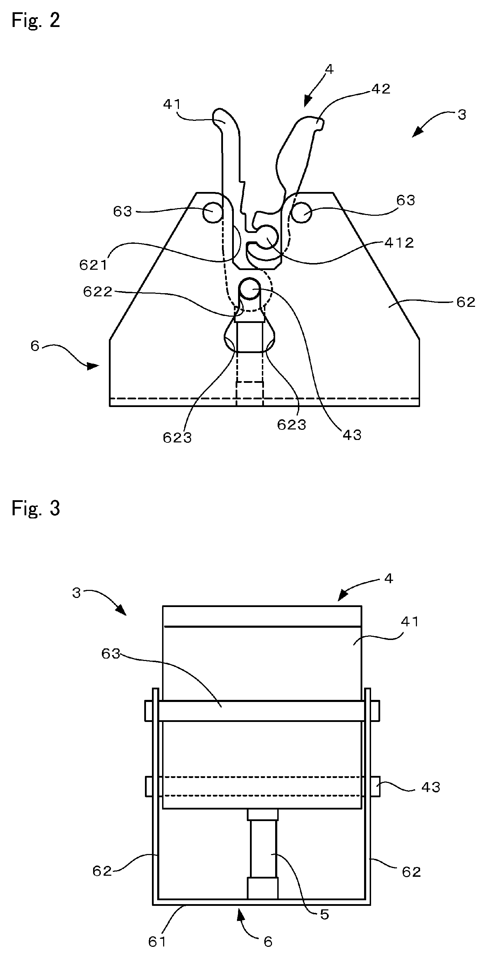

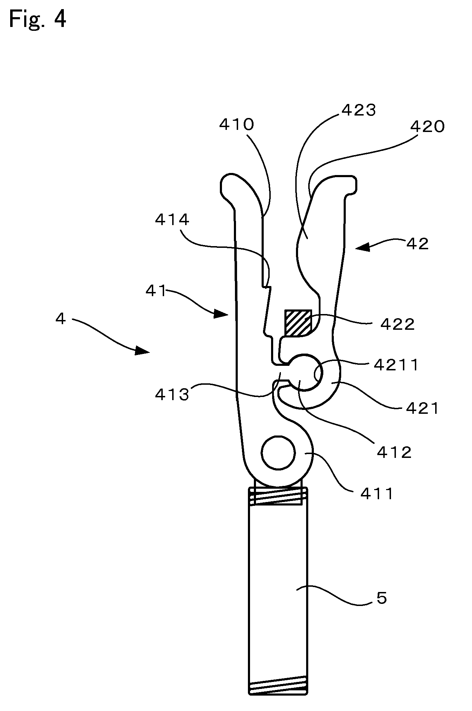

Next, a description is given of the glass plate holder with reference to FIG. 2 to FIG. 4. FIG. 2 is a front view of the glass plate holder, FIG. 3 is a side view pertaining to FIG. 2, and FIG. 4 is a front view of a clip. As shown in FIG. 2 to FIG. 4, the glass plate holder 3 includes: a clip 4 that grips the glass plate 1; and a supporting body 6 that supports the clip 4. Also, a spring (elastic member) 5 is attached to a lower end portion of the clip 4, and the clip 4 is biased upward by the spring 5. The following describes each member.

### 2.1 Clip

As shown in FIG. 4, the clip 4 includes: a first gripping member 41 that faces the first surface 11 of the glass plate 1; and a second gripping member 42 that faces the second surface 12 of the glass plate 1. The gripping members 41 and 42 are both formed to have a rectangular plate-like shape. In the first gripping member 41, the surface that faces the second gripping member 42 constitutes a first gripping surface (first contact portion) 410, and in the second gripping member 42, the surface that faces the first gripping member 41 constitutes a second gripping surface (second contact portion) 420. In other words, the glass plate 1 is gripped between the first gripping surface and the second gripping surface as described below. A shaft fixing portion 411 that has a cylindrical shape and extends in the horizontal direction along the edge of the first gripping member 41 is formed at a lower end portion of the first gripping member 41, and a shaft body (engaging member) 43 is rotatably inserted into the shaft fixing portion 411 (see FIG. 2 and FIG. 3). The shaft body 43 engages with the supporting body 6 as described below.

Also, a shaft member (pivot portion) 412 that extends in the horizontal direction along the first gripping surface 410 is attached to a portion of the first gripping member 41 above the shaft fixing portion 411. The shaft member 412 is formed to have a circular cross section, and is attached to the first gripping surface 410 with a coupling portion 413 between them. The coupling portion 413 has a width that is smaller than the diameter of the shaft member 412. Also, a step portion (supporting portion) 414 that extends in the horizontal direction is formed at a position higher than the shaft member 412 of the first gripping surface 410. An upper end portion of the first gripping member 41 is curved outward, away from the second gripping member 42.

Next, a description is given of the second gripping member 42. A fixing portion 421 that has a U-like cross section and that engages with the shaft member 412 of the first gripping member 41 is provided at a lower end portion of the second gripping member 42. More specifically, the fixing portion 421 is formed such that a U-like opening 4211 faces toward the first gripping member 41 and extends in the horizontal direction. The shaft member 412 of the first gripping member is fitted into the fixing portion 421 so as to be rotatable about the shaft. Thus, the gripping members 41 and 42 are coupled to each other so as to be rotatable relative to each other about the shaft member 412 serving as the pivot, and the distance of the upward-opening gap between the gripping members 41 and 42 can be increased and reduced.

A bulging portion 423 that is formed to have a large thickness and that bulges toward the first gripping member 41 is formed above the fixing portion 421 of the second gripping member 42. Thus, a recessed portion is formed between the fixing portion 421 and the bulging portion 423, and the attaching portion 23 of the molding 2 is housed within this recessed portion as described below. A cushion member 422 made of urethane or the like is positioned on the upper surface of the fixing portion 421 below the recessed portion, and serves as a buffer member for the molding 2 of the glass plate 1 gripped by the clip 4. The center of gravity of the second gripping member 42 is located on the side of the surface of the bulging portion 423 that is farther from the first gripping member 41. Thus, the second gripping member 42 swings in the direction away from the first gripping member 41 due to the effect of the center of gravity unless external force is applied. An upper end portion of the second gripping member 42 is curved outward, away from the first gripping member 41.

### 2.2 Supporting Body

Next, a description is given of the supporting body 6. As shown in FIG. 2 and FIG. 3, the supporting body 6 is formed to have a rectangular shape, and includes: a base plate 61 that extends in the horizontal direction; and a pair of supporting plates 62 that respectively stand on both sides of the base plate 61 opposing each other. Each supporting plate 62 is formed to have a trapezoidal shape, and a slit 621 is formed in an upper end portion of each supporting plate 62. Each slit 621 has an upward opening in its upper end, and extends in the vertical direction. Also, in each supporting plate 62, a guide groove 622 having an elongated hole shape and extending in the vertical direction is formed below its slit 621. Also, a horizontal groove 623 that extends in the horizontal direction is formed in a lower end portion of each guide groove 622, and the horizontal groove 623 communicates with the guide groove 622. Both end portions of the shaft body 43, inserted into the shaft fixing portion 411 of the clip 4 described above, engage with the guide grooves 622. The clip 4 is thus configured to move up and down relative to the supporting body 6 as the shaft body 43 moves up and down along the guide grooves 622.

Also, as shown in FIG. 3, the spring 5 is positioned between the upper surface of the base plate 61 of the supporting body 6 and the lower end portion of the clip 4. The clip 4 is thus biased upward. However, since the shaft body 43 attached to the clip 4 engages with the guide grooves 622 of the supporting body 6 as described above, the upward movement of the clip 4 is restricted by the shaft body 43 coming into contact with respective upper end portions of the guide grooves 622.

A pair of guide bars (pressing portions) 63 are respectively attached to both sides of the slit 621 formed in each supporting plate 62. The guide bars 63 extend so as to couple the supporting plates 62, which face each other, to each other, and the clip 4 is positioned between the guide bars 63. The guide bars 63 are adjusted to be positioned at a position that is slightly higher than the shaft member 412 of the clip 4 in the initial state in which the glass plate 1 is not held. The clip 4 is configured to move up and down between the guide bars 63, and the gripping members 41 and 42 are each configured to swing relative to each other.

### 3. How to Hold Glass Plate

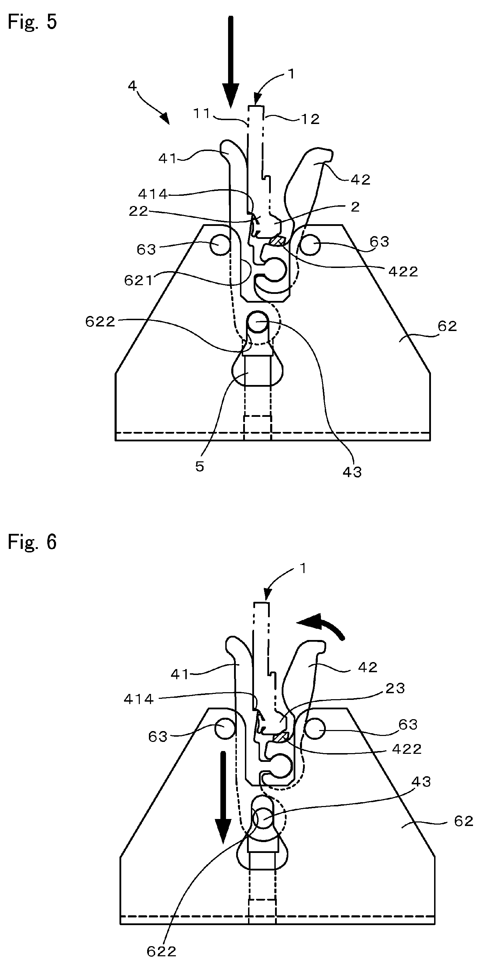

Next, a description is given of how to hold the glass plate 1 with the glass plate holder 3 having the above-described configuration with reference to FIG. 5 and FIG. 6 as well. As shown in FIG. 2, when not holding the glass plate 1, the clip 4 is biased upward by the spring 5. Since a large part of the clip 4 is located at a position higher than the guide bars 63, the second gripping member 42 is not considerably restricted by the guide bars 63, and hence rotates so as to move away from the first gripping member 41 due to the effect of the center of gravity. Thus, the gap between the gripping members 41 and 42 is wide. Consequently, it is easy to insert the glass plate 1 between the gripping members 41 and 42.

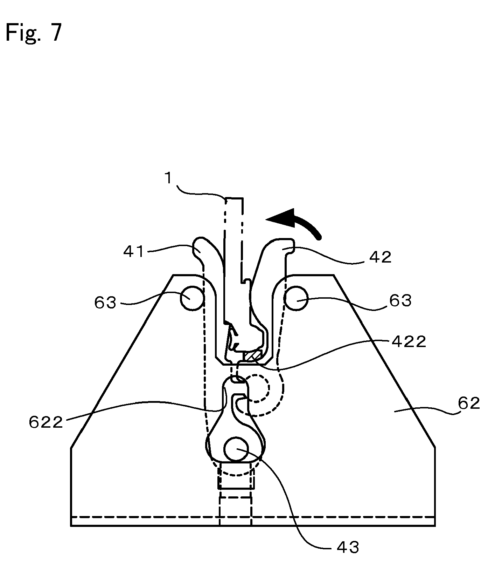

Next, orientation adjustment is performed such that the edge portion 13 of the glass plate 1, to which the molding 2 is attached, is orientated downward, and the first surface 11 of the glass plate 1 faces the first gripping member 41. Then, as shown in FIG. 5, the glass plate 1 is inserted between the gripping members 41 and 42 such that the corner of the edge portion 13 on the first surface 11 side is mounted on the step portion 414 of the first gripping member 41. Upon the edge portion 13 being mounted on the step portion 414 of the first gripping member 41, the first gripping member 41 is pressed downward due to the weight of the glass plate 1, and consequently the clip 4 moves downward, acting against the spring 5. In the meantime, the gripping members 41 and 42 move downward between the guide bars 63. Specifically, as shown in FIG. 6, in order to be able to pass through the gap between the guide bars 63, the gripping members 41 and 42 rotate so as to narrow the gap while being pressed by the guide bars 63, and thus move downward. Consequently, the glass plate 1 is gripped between the gripping members 41 and 42 and is fixed. Then, as shown in FIG. 7, the clip 4 moves downward until the shaft body 43 comes into contact with the lower end portion of the guide groove 622. Note that since the slits 621 are respectively formed in the supporting plates 62 of the supporting body 6, the glass plate 1 is inserted into the slits 621 even if the glass plate 1 is longer than the distance between the supporting plates 62, and the glass plate 1 does not interfere with the supporting body 6.

Upon the clip 4 being thus positioned on the bottom portion, the vicinities of the respective upper end portions of the gripping members 41 and 42 are pressed by the guide bars 63, the gap between the gripping members 41 and 42 is narrowed, and the glass plate 1 is firmly held between them. In this situation, the glass plate 1 is supported by the step portion 414 of the first gripping member 41. Therefore, the attaching portion 23 of the molding 2 only lightly presses the cushion member 422, and is not supported by the gripping members 41 and 42. Thus, according to the present embodiment, it is possible to support the glass plate 1 without applying force to the attaching portion 23. Therefore, it is possible to prevent the attaching portion 23 from deforming due to external force.

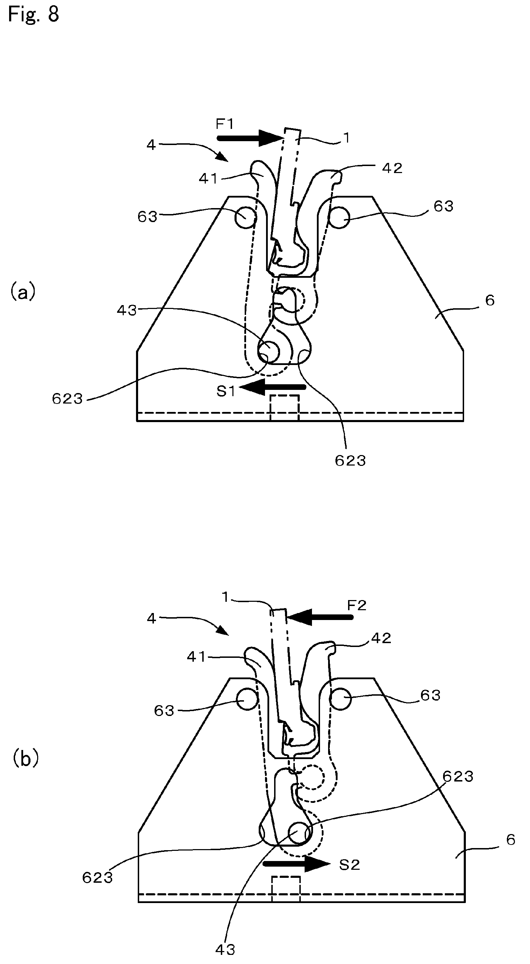

Also, as shown in FIGS. 8A and 8B, the clip 4 is configured such that its lower end portion swings in the horizontal direction if force in the thickness direction is applied to the glass plate 1 in this situation. For example, as shown in FIG. 8A, if a force F1 is applied to the glass plate 1, the clip 4 swings about the respective vicinities of the guide bars 63 serving as the pivots, and the shaft body 43 attached to the lower end portion of the clip 4 moves in a horizontal direction S1 along the horizontal grooves 623 coupled to the respective lower end portions of the guide grooves 622. Similarly, as shown in FIG. 8B, if a force F2 is applied to the glass plate 1, the clip 4 swings about the vicinities of the guide bars 63 serving as the pivots, and the shaft body 43 moves in a horizontal direction S2 along the horizontal grooves 623. Thus, the force applied to the glass plate 1 in the thickness direction can be released, and force acting on the glass plate 1 can be moderated.

Also, it is possible to detach the glass plate 1 from the holder 3 by pulling the glass plate 1 upward. Consequently, the weight of the glass plate 1 acting on the clip 4 is eliminated, and the clip 4 is biased upward by the spring 5. When a large part of the clip 4 is located at a position higher than the guide bars 63, the second gripping member 42 swings away from the first gripping member 41 due to the effect of the center of gravity. Consequently, the glass plate 1 is released from the state of being gripped between the gripping members 41 and 42, and it becomes possible to detach the glass plate 1 from the clip 4.

### 4. Features

As described above, according to the present embodiment, it is possible to grip the glass plate 1 with the clip 4 by positioning the glass plate 1 between the first gripping member 41 and the second gripping member 42 of the clip 4. Also, since the clip 4 is supported by the supporting body 6, the glass plate 1 is held by the supporting body 6 in the vertical position upon the glass plate 1 being attached to the clip 4. Therefore, unlike conventional examples, it is possible to hold the glass plate 1 with a simple operation. Also, since the clip 4 is biased upward by the spring 5, a shock can be moderated by the spring 5 when the glass plate 1 is positioned to the clip 4. Therefore, it is possible to prevent the glass plate 1 from being damaged by a shock when mounting the glass plate 1.

### 5. Modifications

Although one embodiment of the present invention has been described above, the present invention is not limited to the embodiment above, and various modifications can be made without departing from the spirit of the invention. The following are examples of modifications that can be made.

### 5.1

For example, in the embodiment above, the second gripping member 42 rotates so as to move away from the first gripping member 41 due to the effect of the center of gravity. However, an alternative configuration may be adopted in which, in the situation where the glass plate 1 has not been mounted to the clip 4, the gap between the gripping members 41 and 42 is widened by a spring or the like.

### 5.2

In the embodiment above, the gripping members 41 and 42 are sandwiched between the guide bars 63, and the guide bars 63 apply pressure so as to reduce the distance between the gripping members 41 and 42. However, the present invention is not particularly limited to the embodiment if the supporting body is provided with a member or a part that is able to apply pressure so as to reduce the distance between the gripping members 41 and 42.

### 5.3

In the embodiment above, the horizontal groove 623 allows the clip 4 to move in the horizontal direction. However, another configuration may be adopted insofar as the clip 4 is supported by the supporting body 6 so as to be movable in the horizontal direction.

### 5.4

In the embodiment above, the clip is biased by using the spring 5. However, instead of the spring 5, another elastic member that is able to bias the clip 4 upward may be used.

### 5.5

The clip 4 only needs to be able to grip the glass plate 1, and may be configured not to change the distance between the gripping surfaces 410 and 420. Also, a cushion member may be provided on the step portion (supporting portion) 414 of the first gripping member 41.

### 5.6

The configuration of the supporting body 6 is not particularly limited, and it suffices if at least a guide portion that allows the clip to move up and down is formed.

### 5.7

In the embodiment above, a description has been given of the case of holding a glass plate for a car, provided with a molding. However, it is of course possible to hold a different kind of glass plate that is not provided with a molding.

### 5.8

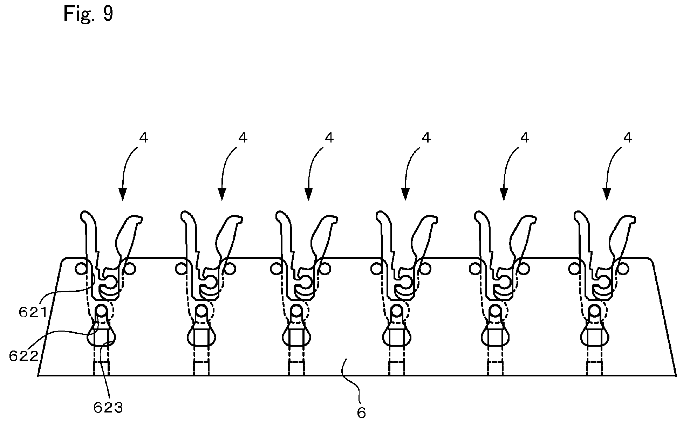

In the glass plate holder 3 according to the embodiment above, a single clip 4 is attached to the supporting body 6. However, a plurality of clips may be attached. For example, as shown in FIG. 9, the base plate 61 and the supporting plates 62 are each formed to have a shape elongated in the horizontal direction, and a plurality of sets of grooves, each set of grooves composed of the slit 621, the guide groove 622, and the horizontal groove 623, are formed as grooves for supporting clips. Then, the clip 4 provided with a plurality of springs is attached to each set of grooves. This configuration makes it possible to support a plurality of glass plates. Note that the number of clips 4 attached to a single supporting body 6 is not particularly limited.

### 5.9

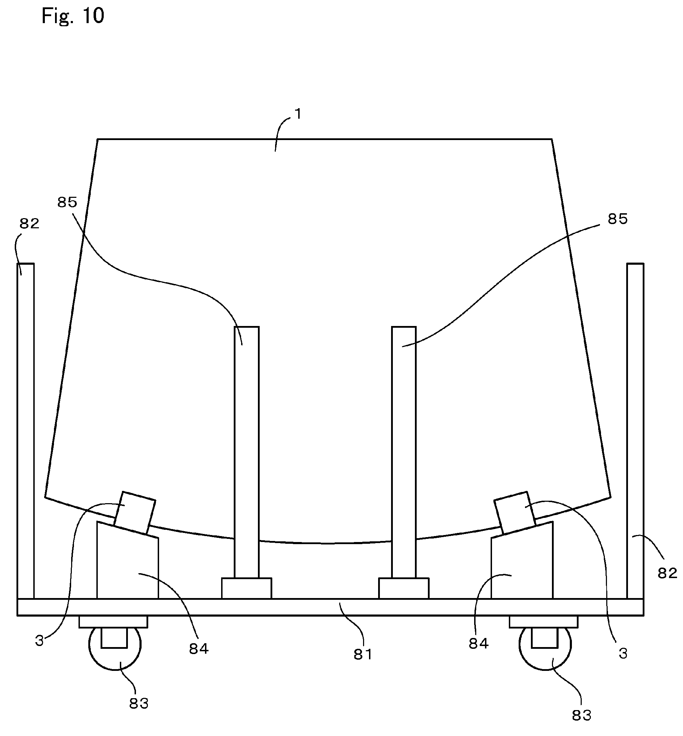

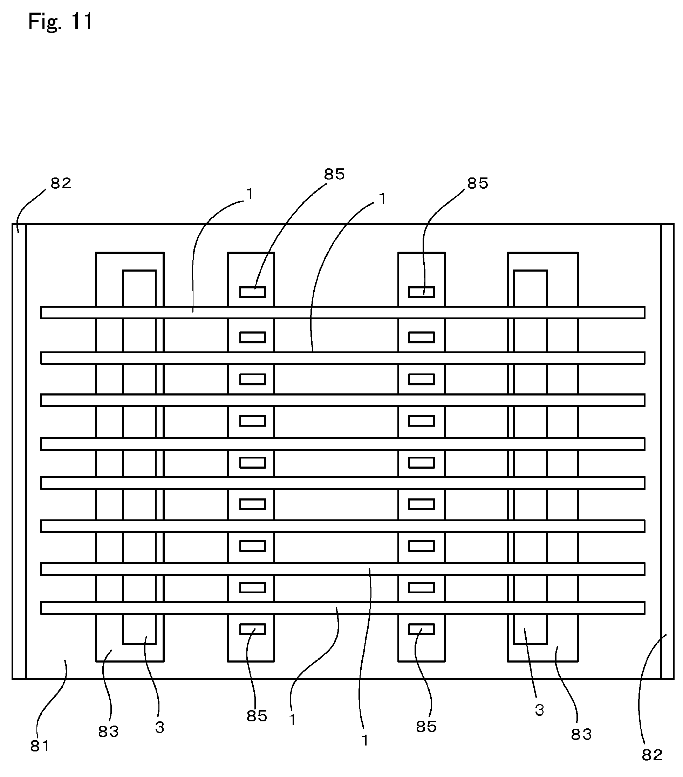

It is also possible to manufacture a glass plate transport device that has the above-described glass plate holders 3 that are able to support a plurality of glass plates. FIG. 10 is a front view of such a glass plate transport device, and FIG. 11 is a plan view pertaining to FIG. 10. As shown in FIG. 10 and FIG. 11, this glass plate transport device includes: a base platform 81 that is formed to have a rectangular shape; and a pair of side plates 82 that respectively stand on both sides of the base platform 81, and casters 83 for transport are attached to the lower surface of the base platform 81. Supporting platforms 84 are respectively provided near the side plates 82 on the base platform 81. Each of the supporting platforms 84 is a member that extends along the corresponding side plate 82 in one direction, and their respective upper surfaces are inclined obliquely downward toward the center of the base platform 81 (the center in the left-right direction in FIG. 10). The glass plate holders 3, each having the plurality of clips 4 shown in FIG. 9, are respectively positioned on the upper surfaces of the supporting platforms 84.

With this configuration, a single glass plate 1 is supported by the clips 4 of the pair of glass plate holders 3. Note that in this example, the bottom edge of the glass plate 1 is curved so as to protrude downward, the upper surfaces of the supporting platforms 84 are formed to be inclined so that the glass plate holders 3 incline. Consequently, the clips 4 of each glass plate holder 3 are attached to be orthogonal to the lower surface of the glass plate 1, and it is thus possible to stably hold the glass plate 1. Also, since the plurality of clips 4 are positioned on each glass plate holder 3, it is possible to hold a plurality of glass plates 1 in parallel at predetermined intervals.

Also, a plurality of partition members 85 in two rows are positioned between the supporting platforms 84 along the supporting platforms 84, at predetermined intervals. Each partition member 85 is formed to have a rod-like shape extending upward. Each partition member 85 is positioned between adjacent glass plates 1, and thus the partition members 85 prevents adjacent glass plates 1 from touching one another.

The glass plate transport device having the above-described configuration makes it possible to transport a plurality of glass plates 1. Note that the configuration of the glass plate transport device is not limited to this configuration, and it suffices if the glass plate transport device is provided with the base platform 81 and the glass plate holder 3 attached to the upper surface of the base platform 81. The base platform 81 may be provided with a travelling mechanism such as the casters 83, or, instead, have a palette shape that allows for transport with a forklift. The number of glass plate holders 3 used for holding a single glass plate 1 may be other than 2, and may be 1, 3, or more than 3. In the case where the supporting platforms 84 are provided, their upper surfaces may be horizontal surfaces, depending on the type of the glass plate 1. If this is the case, the supporting platforms 84 may be omitted. Furthermore, the partition members 85 are not essential, and a different buffer member may be positioned. Also, a single glass plate holder 3 provided with a plurality of clips 4, or a plurality of glass plate holders 3, may be positioned on the base platform 81.

### Reference Signs List

- 1: glass plate

- 11: first surface
- 12: second surface
- 2: molding
- 22: base portion
- 23: attaching portion
- 4: clip
- 41: first gripping member
- 410: first gripping surface (first contact portion)
- 412: shaft member (pivot portion)
- 414: step portion (supporting portion)
- 42: second gripping member
- 420: second gripping surface (second contact portion)
- 43: shaft body (engaging member)
- 5: spring (elastic member)
- 6: supporting body
- 622: guide groove
- 623: horizontal groove
- 63: guide bar (pressing portion)

### B. Second Embodiment (Second Aspect of Invention)

The following describes a second embodiment of a glass plate holder according to the present invention with reference to the drawings.

### 1. Glass Plate with Molding

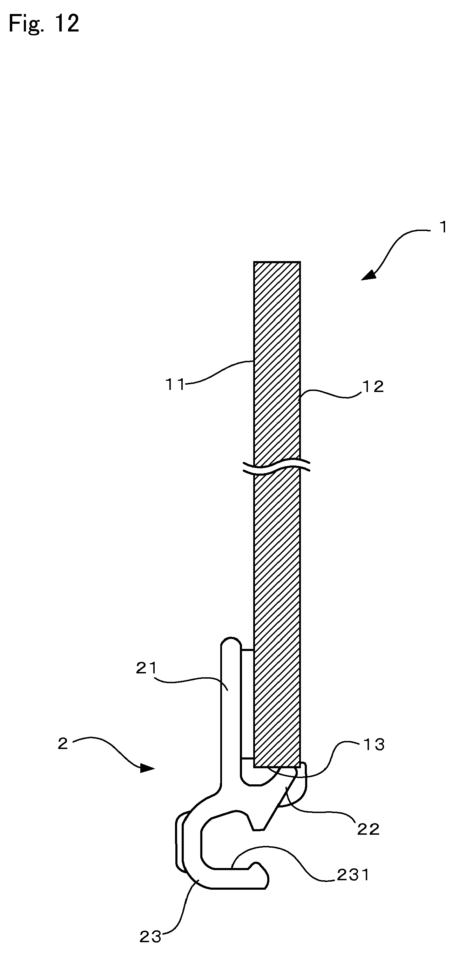

First, a description is given of a glass plate to be handled with the glass plate holder according to the present embodiment with reference to FIG. 12. FIG. 12 is a cross-sectional view of a glass plate. As shown in FIG. 12, this glass plate 1 has almost the same configuration as the configuration described in the first embodiment, and the difference lies in that the molding 2 is attached to the first surface 11 of the glass plate 1. Therefore, a detailed description is omitted.

### 2. Glass Plate Holder

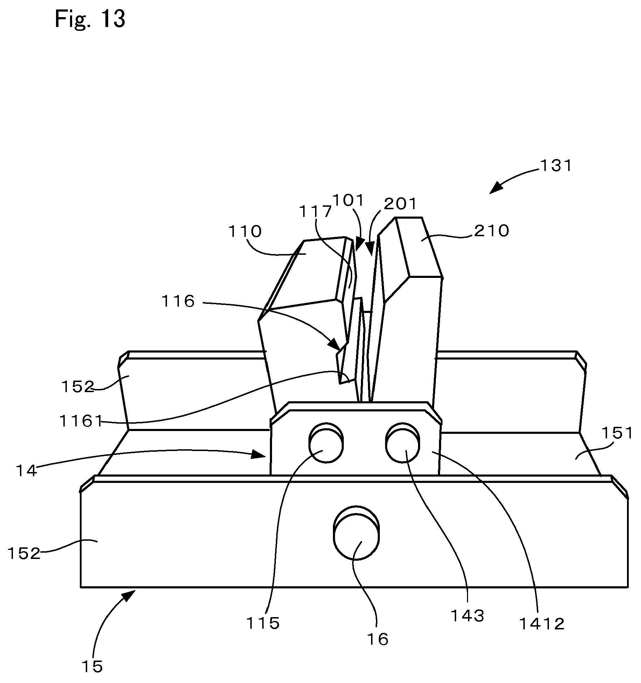

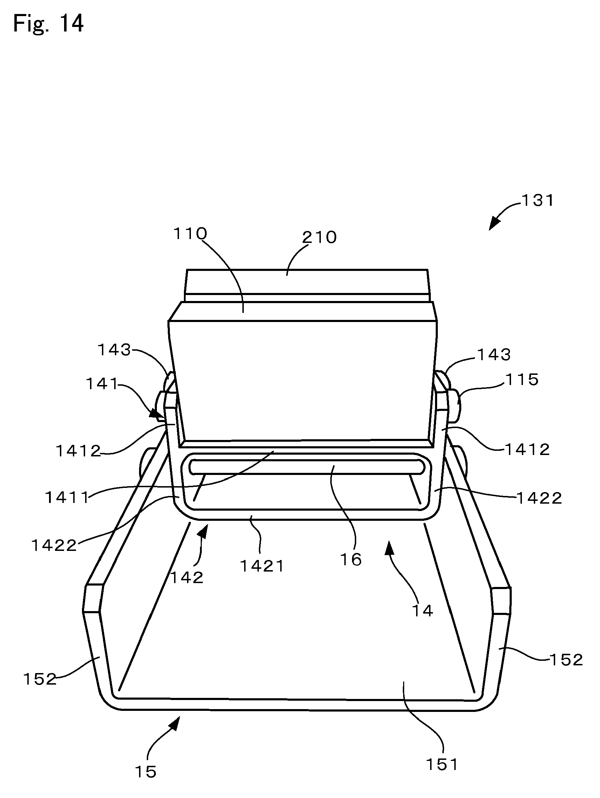

Subsequently, a description is given of the glass plate holder with reference to FIG. 13 and FIG. 14. FIG. 13 is a front perspective view of the glass plate holder, and FIG. 14 is a side perspective view of the same. As shown in FIG. 13 and FIG. 14, this glass plate holder 131 has a first gripping member 110 and a second gripping member 210 that grip the glass plate 1, and the gripping members 110 and 210 are supported by a supporting body 14. Furthermore, this supporting body 14 is supported by a base platform 15. The following describes each member.

The gripping members 110 and 210 are both formed to have a plate-like shape, and are supported by the supporting body 14 so as to face each other in the upright position. In the first gripping member 110, the surface facing the second gripping member 210 constitutes a first gripping surface 101, and in the second gripping member 210, the surface facing the first gripping member 110 constitutes a second gripping surface 201. Specifically, the glass plate 1 is gripped between the first gripping surface 101 and the second gripping surface 201 as described below.

A shaft member 115 that extends in the horizontal direction along the edge of the first gripping member 110 is fixed to the lower end portion of the first gripping member 110, and the first gripping member 110 is configured to be rotatable on the supporting body 14 about the shaft member 115 serving as the rotation center. Thus, the distance of the upward-opening gap between the gripping members 110 and 210 can be increased or reduced. Here, the shaft member 115 is positioned slightly on the second gripping member 210 side rather than at the center of the first gripping member 110 in the thickness direction. Therefore, the center of gravity of the first gripping member 110 is located outside the shaft member 115 (on the opposite side to the second gripping member 210). For this reason, as shown in FIG. 13, the first gripping member 110 rotates so as to move in the direction away from the second gripping member 210 due to the effect of the center of gravity unless external force is applied. Consequently, the gap between the gripping members 110 and 210 is wider at a higher position.

A mounting portion 116 having a groove-like shape extending in the horizontal direction is formed in a mid-portion of the first gripping surface 101 in the vertical direction, and the edge portion 13 of the glass plate 1 is mounted on a surface 1161, which faces upward, of the mounting portion 116. The mounting portion 116 is set to have the following positional relationship with the shaft member 115 above. Specifically, the mounting portion 116 is positioned higher than the shaft member 115, and is positioned between the shaft member 115 and the second gripping member 210 in the horizontal direction. Furthermore, a portion of the first gripping surface 101 above the mounting portion 116 constitutes a pressing portion 117 that protrudes toward the second gripping member 210. As described below, this pressing portion 117 is configured to be able to press the surface of the glass plate 1 when the glass plate 1 is gripped.

The second gripping member 210 is also supported by the supporting body 14. However, the second gripping member 210 is fixed in the upright position so as not to move on the supporting body 14. Therefore, the glass plate 1 is gripped between the gripping members 110 and 210 as a result of the first gripping member 110 swinging toward the second gripping member 210. An upper end portion of the second gripping surface 201 has a surface that inclines outward in the direction away from the first gripping member 110.

Next, a description is given of the supporting body 14. As shown in FIG. 13 and FIG. 14, the supporting body 14 includes: a first supporting portion 141 that supports the gripping members 110 and 210; and a second supporting portion 142 that is formed below the first supporting portion 141 and that supports a supporting shaft body 16 for coupling to the base platform 15, and the supporting portions 141 and 142 are formed integrally with each other. The first supporting portion 141 is formed to have a U-like shape including: a base plate 1411 having a rectangular shape; and a pair of side plates 1412 that respectively stand on both sides of the base plate 1411. The gripping members 110 and 210 are positioned between the pair of side plates 1412. The first gripping member 110 is positioned on the left side of the supporting body 14 in FIG. 13, and both ends of the shaft member 115 fixed to the lower end portion of the first gripping member 110 are rotatably supported by the pair of side plates 1412. Thus, the first gripping member 110 rotates relative to the supporting body 14 about the shaft member 115 serving as the rotation center. On the other hand, the second gripping member 210 is positioned on the right side of the supporting body 14 in FIG. 13. The lower end portion of the second gripping member 210 is fixed to the pair of side plates 1412 with bolts 143 so that the second gripping member 210 maintains the upright position and does not move.

The second supporting portion 142 of the supporting body 14 is formed to have a U-like shape including: a bottom plate 1421 having a rectangular shape; and a pair of coupling plates 1422 that respectively stand on both sides of the bottom plate 1421. Respective upper end portions of the coupling plates 1422 are coupled to the lower surface of the base plate 1411 of the first supporting portion 141. A through holes is formed in each coupling plate 1422, and the supporting shaft body 16 is inserted into these through holes.

Next, a description is given of the base platform 15. The base platform 15 is formed to have a U-like shape with: a base plate 151 having a plate-like shape; and side plates 152 that respectively stand on both sides of the base plate 151. The supporting body 14 is positioned between the side plates 152. More specifically, a through hole is formed in each of the pair of side plates 152, and the supporting shaft body 16 of the supporting body 14 is rotatably inserted into these through holes. Thus, the supporting body 14 is swingable about the supporting shaft body 16 relative to the base platform 15. However, when the supporting body 14 swings, the bottom plate 1421 of the second supporting portion 142 of the supporting body 14 comes into contact with the base plate 151 of the base platform 15, and the swingable range of the supporting body 14 is thus limited.

### 3. How to Hold Glass Plate

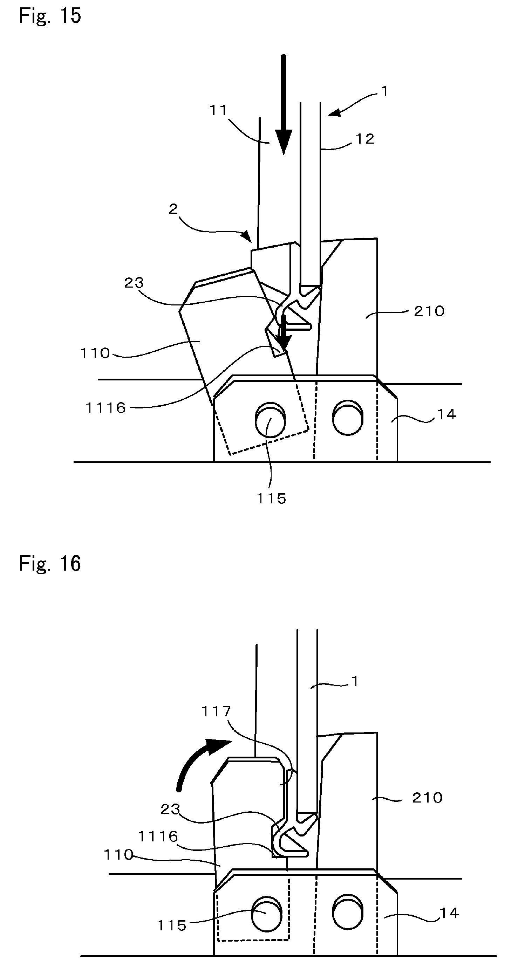

Next, a description is given of how to hold the glass plate 1 with the glass plate holder having the above-described configuration with reference to FIG. 15 and FIG. 16. As shown in FIG. 15, when the glass plate 1 is not being held, the first gripping member 110 swings in the direction away from the second gripping member 210 due to the effect of the center of gravity, and thus the gap between the gripping members 110 and 210 is wide. Consequently, it is easy to insert the glass plate 1 between the gripping members 110 and 210.

Next, orientation adjustment is performed such that the edge portion of the glass plate 1, to which the molding 2 is attached, is orientated downward, and the first surface 11 of the glass plate 1 faces the first gripping member 110. Then, the glass plate 1 is inserted between the gripping members 110 and 210 such that the attaching portion 23 of the molding 2 is mounted on the mounting portion 116 of the first gripping member 110. Since the attaching portion 23 is positioned so as to protrude from the first surface 11 of the glass plate 1, it is easy to mount the attaching portion 23 on the mounting portion 116. Upon the molding 2 being mounted on the mounting portion 116 of the first gripping member 110, the first gripping member 110 is pressed downward due to the weight of the glass plate 1. Consequently, as shown in FIG. 5, the first gripping member 110 rotates about the shaft member 115 toward the second gripping member 210, and thus narrows the gap between the gripping members 110 and 210. At this time, the pressing portion 117 of the first gripping member 110 presses the first surface 11 of the glass plate 1, and accordingly the glass plate 1 is gripped between the gripping members 110 and 210 and is fixed in the upright position.

If force in the thickness direction is applied to the glass plate 1 in this situation, the supporting body 14 swings about the supporting shaft body 16. Thus, the force applied to the glass plate 1 in the thickness direction can be released, and force acting on the glass plate 1 can be moderated.

Also, it is possible to detach the glass plate 1 from the holder 131 by pulling the glass plate 1 upward. Consequently, the weight of the glass plate 1 acting on the mounting portion 116 is eliminated, and the first gripping member 110 rotates so as to move in the direction away from the second gripping member 210 due to the effect of the center of gravity. As a result, the glass plate 1 is released from the state of being gripped between the gripping members 110 and 210, and it becomes possible to detach the glass plate 1 from the holder 131.

### 4. Features

As described above, according to the present embodiment, upon the glass plate 1 being mounted on the mounting portion 116 of the first gripping member 110, the first gripping member 110 rotates toward the second gripping member 210 due to the weight of the glass plate 1 per se. This is because the mounting portion 116 is positioned between the rotation center of the first gripping member 110 and the second gripping member 210. It is possible to grip the glass plate 1 with the gripping members 110 and 210 as a result of the first gripping member 110 rotating toward the second gripping member 210. Therefore, it is possible to hold the glass plate 1 by performing a simple operation to mount the glass plate 1 on the mounting portion 116.

### 5. Modifications

Although one embodiment of the present invention has been described above, the present invention is not limited to the embodiment above, and various modifications can be made without departing from the spirit of the invention. The following are examples of modifications that can be made.

### 5.1

For example, in the embodiment above, the first gripping member 110 rotates so as to move away from the second gripping member 210 due to the effect of the center of gravity. However, an alternative configuration may be adopted in which, in the situation where the glass plate 1 has not been mounted, the gap between the gripping members 110 and 210 is widened by a spring or the like.

### 5.2

In the embodiment above, the pressing portion 117 is provided on the first gripping member. However, the pressing portion 117 is not essential. It is possible to hold the glass plate 1 with the vertical wall surface of the mounting portion 116 and the second gripping member 210.

### 5.3

Although the mounting portion 116 is formed to have a groove-like shape, the shape is not particularly limited insofar as at least an end surface of the glass plate 1 can be mounted on it. For example, it is possible to provide a protruding portion that protrudes from the first gripping surface 101, and use the upper surface of the protruding portion as the mounting surface.

### 5.4

In the embodiment above, the base platform 15 is provided. However, the base platform 15 need not be provided, and the supporting body 14 may be used as a platform.

### 5.5

The configurations of the supporting body 14 and the base platform 15 are not particularly limited. The supporting body 14 only needs to be able to support the gripping members 110 and 210 as described above, and the base platform 15 only needs to be able to support the supporting body 14.

### 5.6

In the embodiment above, a description has been given of the case of holding a glass plate for a car, provided with a molding. However, it is of course possible to hold a different kind of glass plate that is not provided with a molding. Even in the case of a glass plate without a molding, it is possible to mount any end surface on the mounting portion 116.

### 5.7

Also, although the second gripping member 210 is configured so as not to move on the supporting body 14, the second gripping member 210 may be rotatably supported as with the first gripping member 110.

### 5.8

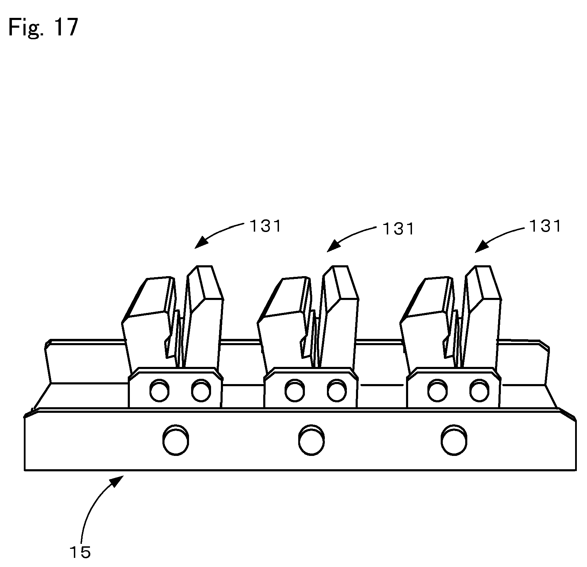

In the embodiment above, a single holder 131 is attached to the base platform 15. However, a plurality of holders 131 may be attached. For example, as shown in FIG. 17, the base platform 15 is formed to have a shape elongated in the horizontal direction, and a plurality of holders 131 are attached to the base platform 15 at predetermined intervals. This configuration makes it possible to support a plurality of glass plates. Note that the number of holders 131 to be attached to a single base platform 15 is not particularly limited.

### 5.9

It is also possible to manufacture a glass plate transport device that has the above-described glass plate holders 131 that are capable of supporting a plurality of glass plates. For example, in the glass plate transport device shown in FIG. 10 and FIG. 11, the holders 131 according to the second embodiment may be used instead of the glass plate holder 3 according to the first embodiment. Specifically, it is possible to position the base platforms 15, each having the plurality of holders 131 shown in FIG. 17, on the upper surfaces of the supporting platforms 84 of the glass plate transport device above.

Such a glass plate transport device makes it possible to transport a plurality of glass plates 1 as with the first embodiment. Note that the configuration of the glass plate transport device is not limited to this configuration. For example, the supporting platforms 84 or the base platform 5 need not be provided, and the glass plate holders 3 may be attached directly to the base plate 81. Other modifications may have the same configuration as the configuration described for the glass plate transport device according to the first embodiment.

### Reference Signs List

- 1: glass plate
- 11: first surface
- 12: second surface
- 110: first gripping member
- 115: shaft member (rotation center)
- 116: mounting portion
- 117: pressing portion
- 210: second gripping member
- 2: molding
- 14: supporting body
- 15: base platform

## Claims

1. A glass plate holder for holding a flat glass plate in a vertical position, comprising:
a clip configured to grip both surfaces of the glass plate;
a supporting body that supports the clip and that has a guide portion that allows the clip to move in a vertical direction; and
an elastic member that biases the clip upward.

2. The glass plate holder according to claim 1, wherein the clip is supported by the supporting body so as to be able to move in a thickness direction of the glass plate.

3. The glass plate holder according to claim 1 or 2, wherein the clip includes:
a first gripping member that has a first contact portion configured to be in contact with one surface of the glass plate;
a second gripping member that has a second contact portion configured to be in contact with the other surface of the glass plate; and
a pivot portion that supports the first gripping member and the second gripping member such that the first gripping member and the second gripping member are rotatable relative to each other, and
the supporting body
includes a pressing portion that presses at least one of the gripping members so as to narrow a gap between the first contact portion and the second contact portion as the clip moves downward.

4. The glass plate holder according to claim 3, wherein the second gripping member:
has a center of gravity on a side of a surface that is farther from the first gripping member; and
rotates so as to move away from the first gripping member due to an effect of the center of gravity upon the clip moving upward.

5. The glass plate holder according to any one of claims 1 to 4, wherein
the clip is provided with an engaging member,
the guide portion includes a guide groove with which the engaging member engages such that the engaging member is able to move in a vertical direction, and
an upward movement of the engaging member is restricted by an upper end portion of the guide groove.

6. The glass plate holder according to claim 5, wherein
the engaging member is provided on a lower end portion of the clip, and
a horizontal groove that extends in the thickness direction of the glass plate communicates with a lower end portion of the guide groove.

7. The glass plate holder according to any one of claims 1 to 6, wherein the glass plate is a glass plate for a car.

8. The glass plate holder according to claim 7, wherein
a molding is attached to at least part of a peripheral portion of the glass plate,
the clip has a supporting portion that supports the glass plate, and
the supporting portion supports an edge portion of the glass plate to which the molding is attached.

9. A glass plate transport device that is provided with at least one glass plate holder according to any one of claims 1 to 8.
